# FASCICULE DE BREVET EUROPEEN

(11) **EP 0 421 842 B1**
(45) Date de publication et mention de la délivrance du brevet: **15.12.1993**
(21) Numéro de dépôt: 90402654.9
(22) Date de dépôt: 26.09.1990
(51) Int. Cl.: B29C 45/17

(54) **Injecteur de gaz sous pression dans un moule de fabrication d'une pièce en matière plastique, moule et procédé de moulage utilisant un tel injecteur et pièce en matière plastique obtenue**
Injektor für Druckgas in eine Form zum Herstellen eines Kunststoffteils, Form und Formverfahren unter Verwendung eines solchen Injektors und erhaltenes Kunststoffteil
Injector for pressurised gas into a mould for making a plastic item, mould and moulding method using such an injector and plastic item thus obtained

(30) Priorité: 04.10.1989 FR 8912991
(43) Date de publication de la demande: 10.04.1991
(73) Titulaire: AUTOMOBILES PEUGEOT, 75116 Paris (FR); AUTOMOBILES CITROEN, 92200 Neuilly-sur-Seine (FR)
(72) Inventeur: Philibert, Jean-Claude, F-95120 Ermont (FR); Taillefert, Raymond, F-92390 Villeneuve la Garenne (FR)
(74) Mandataire: Bouget, Lucien

(56) Documents cités:
- EP-A- 0 322 285
- FR-A- 1 394 552
- GB-A- 2 139 548
- GB-A- 2 158 002
- PATENT ABSTRACTS OF JAPAN, vol. 6, no. 117 (M-139)[995], 30 juin 1982; & JP-A-57 43 846 (SEIKI KOGYO K.K.) 12-03-1982
- PLASTICS IN AUTOMOBILES: BUMPERSYSTEMS, INTERIOR TRIM, INSTRUMENT PANELS, AND EXTERIOR PANELS, février 1989, pages 155-162, Society of Automotive Engineers, Inc., Warrendale, US; K.C. RUSCH: "Gas assisted injection molding - The new thermoplastic molding technology for exterior body panels"

## Description

L'invention concerne un procédé de fabrication d'une pièce en matière plastique dans un moule avec injection de gaz et un moule comportant un tel injecteur.

On réalise par des procédés de moulage sous pression des pièces en matière plastique de dimensions relativement importantes qui doivent présenter une bonne rigidité.

Par exemple, dans le domaine de la construction automobile, on réalise ainsi des pièces telles que des planches de bord ou des pare-chocs.

De manière à rigidifier la pièce, on peut utiliser des renforts métalliques constitués par exemple par des éléments réalisés à partir de tôles qui sont noyés dans la matière plastique au moment du moulage.

Pour éviter l'utilisation de telles pièces de renfort métalliques, on a également proposé de créer un ou plusieurs réseaux de corps creux à l'intérieur de la pièce en matière plastique, par injection de gaz dans l'empreinte du moule, après avoir réalisé l'injection sous pression de la matière plastique.

Le gaz dont on réalise l'injection est généralement constitué par un gaz inerte tel que l'azote.

On peut ainsi obtenir par moulage des pièces creuses qui reproduisent de manière très exacte la forme de l'empreinte, dans la mesure où le gaz sous pression injecté au centre de la pièce exerce une pression sur la matière plastique venant en contact avec les parois du moule.

Un tel procédé d'injection est décrit par exemple dans le GB-A-2.139.548.

Pour effectuer l'injection du gaz dans l'empreinte du moule, on peut utiliser des dispositifs comportant un injecteur fixé dans une paroi du moule et ayant une partie d'extrémité en saillie à l'intérieur de l'empreinte, de manière à injecter le gaz inerte dans la partie centrale de la pièce en matière plastique.

De tels dispositifs d'injection doivent comporter des organes de fermeture tels que des aiguilles ou pointeaux montés mobiles à l'intérieur de l'injecteur et associés à des dispositifs de commande de déplacement tels que des vérins.

L'injecteur peut également être associé à un circuit d'injection complexe comportant des vérins, des clapets et des électrovannes.

Le but de l'invention est donc de proposer un procédé de fabrication conforme à la revendication 1 d'une pièce en matière plastique par moulage par injection de la matière plastique chaude et sous pression dans une empreinte de moulage d'un moule comportant un injecteur de gaz sous pression, fixé dans une paroi du moule et comportant une partie d'extrémité en saillie dans l'empreinte de moulage délimitée par les parois internes du moule, ce procédé mettant en oeuvre un injecteur d'une structure simple sans organe mobile d'obturation et permettant de réaliser une injection simultanée de la matière plastique et du gaz dans le moule, du fait que la matière plastique ne peut passer à travers l'injecteur.

Dans ce but, on injecte du gaz sous pression dans l'empreinte du moule renfermant de la matière plastique, pendant le moulage en utilisant un injecteur constitué par un fourreau tubulaire fixé dans une paroi du moule et par un pointeau engagé en position fixe dans l'alésage interne du fourreau, percé d'un canal d'alimentation en gaz sous pression communiquant avec une chambre d'injection annulaire délimitée entre la surface intérieure du fourreau et la surface externe du pointeau dont la largeur dans la direction radiale est très faible dans la partie d'extrémité en saillie de l'injecteur, un très faible jeu radial étant maintenu entre le fourreau et le pointeau dans cette partie d'extrémité.

L'invention est également relative à un injec-teur et un moule pour la fabrication d'une pièce en matière plastique par le procédé suivant l'invention conformément aux revendications 2 et 8.

Afin de bien faire comprendre l'invention, on va maintenant décrire, à titre d'exemple non limitatif, en se référant aux figures jointes en annexe, un moule pour la fabrication d'une pièce en matière plastique selon le procédé de l'invention, comportant des injecteurs pour former des cavités à l'intérieur de la pièce pendant le moulage.

La figure 1 est une vue en coupe par un plan vertical d'un moule pour la fabrication par injection sous pression d'une pièce en matière plastique.

La figure 2 est une vue en coupe à plus grande échelle de la partie d'extrémité supérieure d'un injecteur de gaz sous pression du moule représenté sur la figure 1.

La figure 3 est une coupe partielle d'une partie d'une pièce moulée par le procédé selon l'invention, au niveau d'une nervure de renforcement.

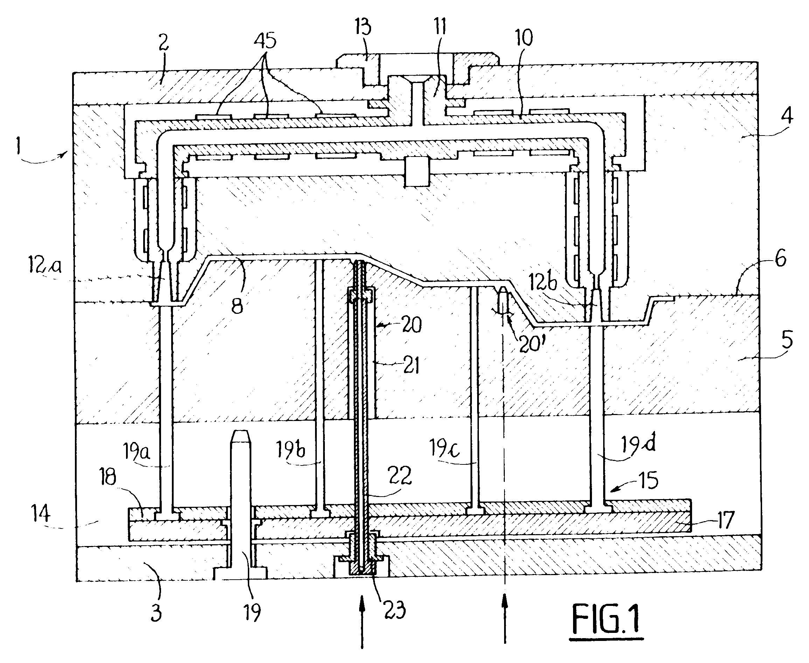

Sur la figure 1, on voit un moule pour la fabrication par injection sous pression d'une pièce en matière plastique, désigné de manière générale par le repère 1.

Dans sa position de service représentée sur la figure 1 permettant le moulage d'une pièce, le moule 1 est intercalé entre le plateau supérieur fixe 2 et le plateau inférieur mobile 3 d'une presse assurant pendant le moulage, le maintien du demi-moule inférieur mobile 5 contre le demi-moule supérieur fixe 4, suivant le plan de joint 6 des deux parties du moule.

Le demi-moule supérieur 4 constitue la matrice solidaire du plateau fixe 2 et le demi-moule inférieur 5 le poinçon solidaire du plateau inférieur mobile 3.

Le plateau inférieur mobile 3 et le poinçon 5 sont montés mobiles par rapport au plateau fixe 2 et à la matrice 4 dans la direction verticale perpendiculaire aux plateaux 2 et 3 à disposition horizontale.

Dans la position de fermeture du moule représentée sur la figure 1, des parois internes des deux parties du moule 4 et 5 disposées en vis-à-vis délimitent entre elles une empreinte de moulage 8 dont la forme correspond à la forme de la pièce dont on réalise la fabrication. L'empreinte 8 est fermée à ses extrémités par des parois planes des deux demi-moules maintenus en contact étanche par les plateaux de la pièce, suivant le plan de joint 6.

Le demi-moule supérieur 4 solidaire du plateau 2 de la presse comporte une partie creuse dans laquelle est monté un conduit d'injection de matière plastique 10 comportant une busette d'entrée 11 fixée au niveau d'une ouverture traversant le plateau supérieur 2 de la presse et deux busettes d'injection 12a et 12b débouchant sur la paroi interne de la matrice 4, au niveau de parties d'extrémité de l'empreinte 8.

Une buse d'injection 13 est fixée dans l'ouverture du plateau supérieur 2 de la presse de manière coaxiale par rapport à la busette d'entrée 11.

La matière plastique chaude sous pression dont on réalise le moulage peut être injectée dans l'empreinte 8, après fermeture du moule, par l'intermédiaire de la buse 13, de la busette d'entrée 11, du conduit 10 et des busettes d'injection 12a et 12b.

Le demi-moule inférieur 5 solidaire du plateau mobile 3 de la presse comporte une ouverture 14 s'étendant sur toute sa longueur dans laquelle est monté un dispositif 15 d'éjection de la pièce moulée. Ce dispositif comporte une plaque d'éjection 17 sur laquelle est fixée par des vis une plaque de bridage 18 assurant la fixation de tiges d'éjection telles que 19a, 19b, 19c et 19d sur la plaque d'éjection 17.

Les tiges d'éjection 19a, 19b, 19c, 19d de direction verticale sont engagées dans des trous de passage rectilignes traversant le demi-moule inférieur 5 dans la direction verticale.

La plaque d'éjection 17 est montée mobile dans la direction verticale à l'intérieur de l'ouverture 14, grâce à des colonnes de guidage telles que 19 solidaires du plateau inférieur 3 de la presse. Cette plaque d'éjection comporte également des moyens de déplacement dans la direction verticale par rapport au plateau 3 et au demi-moule 5 non représentés. Ces moyens de déplacement permettent de soulever les tiges d'éjection telles que 19a, 19b, 19c et 19d après ouverture du moule de manière que l'extrémité de ces tiges vienne en saillie à l'intérieur de l'empreinte de moulage 8 et réalise l'éjection de la pièce moulée et refroidie.

Le demi-moule inférieur mobile 5 comporte également des injecteurs de gaz sous pression selon l'invention tels que 20 et 20' dont l'extrémité supérieure est introduite à l'intérieur d'ouvertures telles que 21 traversant, dans la direction verticale, la partie supérieure du demi-moule 5.

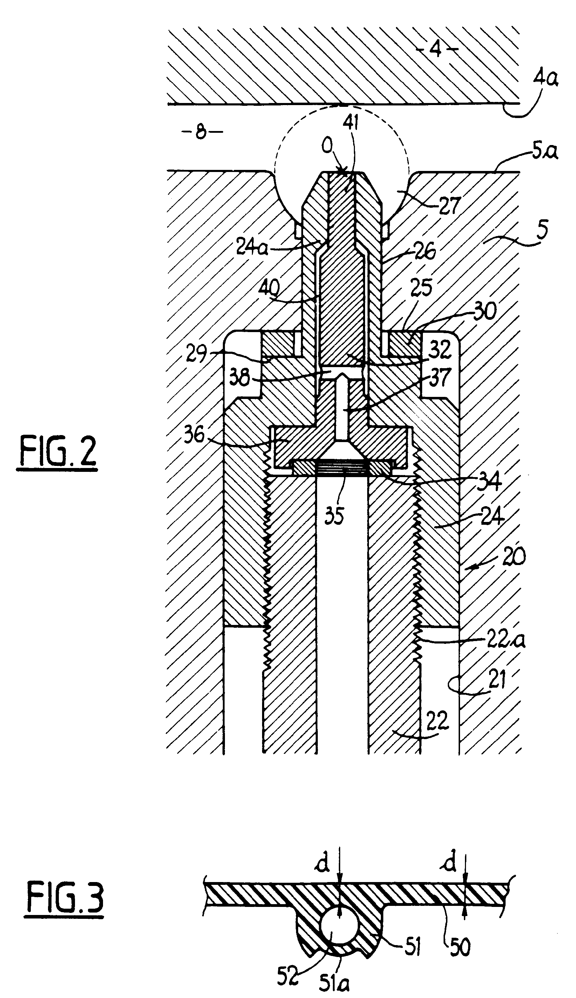

En se référant aux figures 1 et 2, on voit que les injecteurs 20 sont réalisés sous la forme de cannes dont l'extrémité inférieure est fixée sur le plateau inférieur 3 de la presse et dont la partie supérieure débouche au niveau de la paroi interne du demi-moule 5 pour venir en saillie à l'intérieur de l'empreinte 8, dans la position de fermeture du moule.

La canne d'injection 20 comporte un conduit tubulaire de forte épaisseur 22 dont la partie inférieure est reliée, par l'intermédiaire d'un ensemble de raccordement 23, au plateau 3 de la presse et à un dispositif d'alimentation de l'injecteur en azote sous pression.

La partie supérieure du conduit tubulaire 22 comporte une partie filetée 22a sur laquelle est vissé un fourreau 24 comportant un alésage intérieur taraudé.

L'ouverture 21 de direction verticale ménagée dans le demi-moule inférieur 5 présente une partie à grand diamètre se terminant par un épaulement 25 à une distance verticale relativement faible en-dessous de la surface interne 5a du demi-moule 5 délimitant l'empreinte de moulage 8.

L'ouverture 21 débouche dans l'empreinte de moulage 8 par une partie à faible diamètre 26, au niveau d'une cavité de forme semi-cylindrique usinée dans la paroi interne 5a du demi-moule inférieur 5.

Le fourreau 24 comporte une partie inférieure A grand diamètre comportant l'alésage taraudé dans lequel vient se visser la partie supérieure filetée 22a du tube 22. Le diamètre de la partie inférieure du fourreau 24 est sensiblement égal au diamètre de l'ouverture 21, le fourreau 24 venant s'engager sans jeu dans cette ouverture.

Le fourreau 24 comporte une partie supérieure 24a à faible diamètre qui est engagée sans jeu et de manière étanche à l'intérieur de l'alésage 26 du demi-moule 5.

La partie inférieure à grand diamètre du fourreau 24 et la partie supérieure à faible diamètre 24a sont reliées entre elles par deux épaulements successifs, l'épaulement supérieur 29 venant en appui sur une cale de réglage 30 de forme annulaire intercalée entre le fourreau 24 et l'épaulement 25 de l'ouverture 21, de manière à régler la position de l'extrémité supérieure 24a de l'injecteur, par rapport à la cavité de moulage 8.

L'injecteur ou canne d'injection 20 comporte également un pointeau 32 engagé à l'intérieur de la partie supérieure de l'alésage du fourreau 24.

Le pointeau 32 est maintenu à l'intérieur du fourreau 24 par l'extrémité supérieure du conduit tubulaire 22 qui vient en appui sur une bague 34 dans laquelle est serti un filtre 35 constitué par un tamis métallique ayant une maille de l'ordre de 30 µm.

Le pointeau 32 comporte une embase à grand diamètre 36 se terminant par un épaulement venant en butée sur un épaulement correspondant de l'alésage intérieur du fourreau 24.

Le pointeau 32 est donc maintenu dans le fourreau 24, par serrage de son embase 36 entre la bague 34 sur laquelle le tube 22 vient en appui et un épaulement de la surface interne du fourreau 24.

Le pointeau 32 comporte, dans sa partie inférieure, un canal 37 de direction axiale débouchant, à sa partie supérieure, dans une ouverture 38 traversant le pointeau 32 dans une direction diamétrale.

La partie inférieure du canal 37 évasée en tronc-de-cône vient dans le prolongement de l'alésage interne du conduit tubulaire 22, le filtre 35 étant intercalé entre les parties d'extrémité du conduit tubulaire 22 et du canal 37 placées dans le prolongement l'une de l'autre.

De cette manière, lorsque de l'azote sous pression est envoyé dans le conduit tubulaire 22 par le circuit d'alimentation relié à la partie inférieure du conduit 22, cet azote traverse le filtre 35 avant de pénétrer dans le canal 37 du pointeau 32. Le filtre 35 permet d'arrêter les impuretés provenant des canalisations du circuit d'alimentation et entraînées par l'azote circulant dans le conduit 22.

Le pointeau 32 comporte, au-dessus de son embase, une partie médiane dans laquelle débouche l'ouverture diamétrale 38 communiquant avec le canal axial 37.

Cette partie médiane du pointeau 32 est engagée dans l'alésage de la partie à faible diamètre 24a du fourreau 24 pour constituer une chambre annulaire 40 fermée de manière étanche à sa partie inférieure, en-dessous de l'ouverture diamétrale 38.

Enfin, le pointeau 32 comporte, dans le prolongement de sa partie médiane, une partie supérieure 41 dont le diamètre est inférieur au diamètre de la partie médiane engagée avec un très faible jeu radial dans la partie d'extrémité du fourreau 24a débouchant, à l'intérieur de la cavité semi-cylindrique 27, dans l'empreinte de moulage 8. La partie supérieure de l'alésage du fourreau dans sa partie en saillie débouchant à l'intérieur de l'empreinte de moulage 8 présente un diamètre réduit par rapport au diamètre de l'alésage recevant la partie médiane du pointeau 32.

La partie d'extrémité du fourreau 24 en saillie dans l'empreinte de moulage 8 comporte une surface terminale de forme tronconique. L'extrémité supérieure du pointeau 32 et l'extrémité supérieure du fourreau 24 sont délimitées par un même plan horizontal à l'intérieur de l'empreinte de moulage 8. Ce plan horizontal constitue également le plan axial délimitant la cavité semi-cylindrique 27 usinée dans la surface 5a du demi-moule 5.

L'extrémité de l'injecteur en saillie à l'intérieur de l'empreinte de moulage 8 débouchant par l'ouverture 26 de la paroi 5a est également centrée par rapport à la cavité semi-cylindrique 27, si bien que la partie centrale de l'extrémité supérieure du pointeau 32 se trouve placée sur l'axe de la cavité semi-cylindrique 27. On a représenté la trace O de cet axe sur le plan de la figure 2.

La section semi-circulaire de la cavité 27 a donc pour centre le point O qui est confondu avec la partie centrale de l'extrémité supérieure de l'injecteur.

De plus, la cavité semi-cylindrique 27 présente un rayon sensiblement égal à la hauteur de l'empreinte de moulage 8, si bien que le cercle de centre O et de rayon égal à la hauteur de l'empreinte de moulage, délimitant la section semi-circulaire de la cavité 27 est tangent à la surface interne 4a du demi-moule supérieur 4.

L'extrémité de l'injecteur se trouve ainsi dans une position centrée par rapport à l'empreinte de moulage, au niveau de la cavité 27.

Cette disposition peut être obtenue en choisissant l'épaisseur de la cale de réglage 30.

L'azote sous pression envoyé par le circuit d'alimentation dans le conduit tubulaire 22 traverse le filtre 35, pénètre dans le canal axial 37 du pointeau 32, puis dans la chambre annulaire 40 ménagée entre la partie médiane du pointeau 32 et l'alésage de la partie correspondante du fourreau, par l'ouverture radiale 38.

L'azote sous pression est ensuite injecté dans l'empreinte de moulage 8 par l'espace annulaire de très faible largeur ménagé entre la partie d'extrémité supérieure 41 du pointeau 32 et la partie d'extrémité supérieure de l'alésage du fourreau 24 constituant le prolongement de la chambre annulaire 40. Le jeu diamétral de montage entre le pointeau et le fourreau est de l'ordre de 0,05 mm. La largeur de la chambre annulaire dans sa partie d'extrémité est donc de l'ordre de 0,025 mm.

La valeur de ce jeu est telle que la matière plastique sous pression ne peut passer dans l'interstice entre les pièces constituant l'extrémité de l'injecteur mais que le gaz sous pression peut être injecté par cet espace annulaire de très faible largeur.

Il est donc possible d'effectuer simultanément l'injection de la matière plastique chaude sous pression dans l'empreinte de moulage 8 et du gaz sous pression par l'extrémité de l'injecteur, au voisinage du point O situé au centre de la veine de matière plastique liquide, au niveau de la cavité 27.

A titre d'exemple, le tube 22 peut présenter avantageusement un diamètre intérieur de 4 mm et le canal 37 un diamètre d'un millimètre.

La largeur de la chambre annulaire 40 peut être de l'ordre de 0,25 mm, ce qui correspond à un jeu de 0,5 mm entre les diamètres de la partie médiane du pointeau 32 et de la partie correspondante de l'alésage du fourreau 24.

Comme indiqué plus haut, le jeu diamétral entre la partie supérieure du pointeau 32 et l'alésage du fourreau 24 est de 0,05 mm.

Cette valeur doit être assurée avec une précision de 5 µm.

Le jeu diamétral doit donc être compris impérativement entre 0,045 mm et 0,055 mm.

L'injecteur et en particulier le fourreau 24 et le pointeau 32 doivent être réalisés en un matériau résistant à la corrosion et en particulier à l'oxydation, dans leurs conditions d'utilisation à l'intérieur du moule. Ces pièces seront réalisées de manière préférentielle en bronze ou en acier inoxydable.

Le filtre 35 peut être réalisé à partir de fils en acier inoxydable et la bague 34 de sertissage et de calage peut être constituée par une pièce en aluminium, en cuivre ou en laiton.

Dans le cas d'une pièce de petites dimensions, le moule peut comporter une seule busette d'injection de matière plastique et un seul injecteur de gaz sous pression placés dans des positions bien déterminées.

En revanche, dans le cas d'une pièce de grandes dimensions telle qu'une planche de bord ou un pare-chocs pour véhicules automobiles, il est nécessaire d'utiliser plusieurs busettes d'injection de matière plastique, ces busettes pouvant être alimentées par une buse unique et plusieurs injecteurs de gaz sous pression constituant les parties d'extrémité de cannes d'injection qui peuvent être alimentées indépendamment en gaz sous pression, grâce à des électrovannes d'un circuit de distribution de gaz associées à chacune des cannes.

Par exemple, dans le cas d'une planche de bord de véhicule automobile, on peut être amené à utiliser six cannes d'injection de gaz sous pression dont les injecteurs débouchent dans l'empreinte de moulage dans des positions déterminées.

En général, les injecteurs des cannes d'injection de gaz sous pression se trouvent placés dans des points de la cavité de moulage différents des points où sont situées les busettes d'injection de matière plastique. Cette disposition permet de faciliter la mise en place des injecteurs de gaz sous pression.

Pour réaliser une opération de fabrication d'une pièce par injection de matière plastique dans la cavité du moule, ce moule est placé dans sa configuration représentée sur la figure 1, la partie inférieure mobile 5 étant appliquée contre la partie supérieure fixe 4 suivant le plan de joint 6.

On réalise l'injection de matière plastique chaude sous pression dans l'empreinte 8 du moule par l'intermédiaire de la buse 13, du conduit 10 et des busettes 12a et 12b. Le conduit 10 est entouré par des colliers chauffants 45 permettant de maintenir la matière plastique à une température élevée assurant sa fluidité à l'intérieur du conduit 10.

L'injection de gaz sous pression par les cannes d'injection et les injecteurs 20 peut être effectuée en même temps que l'injection de la matière plastique dans la cavité du moule, dans la mesure où cette injection ne nécessite pas la fermeture d'un élément mobile de l'injecteur.

Il est également possible d'effectuer l'injection du gaz de manière décalée dans le temps, par exemple de quelques secondes, après le début de l'injection de matière plastique. Il est également possible de continuer l'injection de gaz sous pression alors que l'injection de matière plastique est, terminée ou inversement de continuer à injecter de la matière plastique alors que l'injection de gaz est terminée.

Dans tous les cas, les conditions d'injection du gaz, en ce qui concerne la phase du moulage pendant laquelle est effectuée cette injection, la quantité et la pression de gaz injecté ainsi que les zones d'injection sont déterminées de manière très précise en fonction des caractéristiques des pièces à réaliser, de la matière plastique utilisée et de la dimension et de la forme des cavités obtenues dans la pièce grâce à l'injection de gaz sous pression.

L'injection de gaz sous pression est effectuée au centre de la veine de matière plastique chaude venant remplir l'empreinte de moulage.

Dans le cas où l'on désire former des cavités à l'intérieur de parties de renforcement de la pièce, l'injection de gaz sous pression sera réalisée de préférence au niveau d'une cavité correspondant à un élargissement de l'empreinte de moulage, comme représenté sur la figure 2.

A titre d'exemple, dans le cas du moulage d'une planche de bord d'un véhicule automobile, la matière plastique peut être injectée à une température d'environ 260°C sous une pression de 600 à 1100 bars pendant 6 à 7 secondes avant d'exercer une pression de compactage de 70 à 150 bars pendant 15 secondes.

Dans un intervalle de temps compris entre 1 et 6 secondes après le début de l'injection de matière plastique, on réalise l'injection de gaz sous pression constitué par de l'azote à une pression de 125 à 190 bars pendant 15 secondes, en utilisant les cannes et injecteurs selon l'invention.

Dans le cas d'un moule tel que représenté sur les figures 1 et 2, le gaz est injecté au centre O d'une zone de l'empreinte de moulage comportant une cavité semi-cylindrique 27. Le gaz est donc injecté au centre de la veine de matière plastique chaude remplissant l'empreinte de moulage, c'est-à-dire des la zone où la matière plastique est la plus fluide. En effet, la matière plastique se refroidit très rapidement en contact avec les parois internes du moule et commence a perdre sa fluidité, puis à se solidifier.

Le gaz est envoyé au voisinage du centre O de la zone du moule destinée à constituer une nervure transversale de renforcement, de manière à occuper, au centre de cette zone de renforcement, un volume cylindrique dont l'axe transversal a pour trace le point O sur la figure 2.

Lorsqu'un refroidissement suffisant de la pièce a été obtenu, on abaisse le plateau mobile 3 de la pièce et le demi-moule inférieur 5 sur lequel repose la pièce qui vient d'être moulée.

On réalise alors l'éjection de la pièce en manoeuvrant la plaque d'éjection 17 pour la déplacer vers le haut. La pièce est reprise par un manipulateur et la plaque d'éjection 17 est replacée en position basse. Le moule est alors prêt pour une nouvelle opération d'injection.

Lors de l'éjection de la pièce, les parties en saillie des injecteurs de gaz sous pression sont extraites de la matière plastique constituant la pièce qui présente encore une certaine fluidité.

Comme il est visible sur la figure 3, la pièce moulée 50 présente une nervure de renforcement 51 de forme semi-cylindrique correspondant à la forme du volume intérieur de la cavité 27 de l'empreinte de moulage. Cette nervure 51 s'étend sur toute la largeur de la pièce, dans une direction perpendiculaire au plan des figures 1 et 2. La nervure de rigidification 51 est fermée à sa partie inférieure par une paroi 51a qui se forme au moment du retrait de l'extrémité de l'injecteur lors de l'éjection de la pièce, par écoulement de la matière plastique qui présente encore une certaine fluidité. La nervure 51 comporte un canal transversal 52 A section circulaire formé par injection du gaz pendant l'opération de moulage, suivant des conditions bien déterminées, comme indiqué ci-dessus.

Le gaz injecté dans la matière plastique chaude et fluide est susceptible de diffuser et de progresser à l'intérieur de cette matière plastique jusqu'à une zone relativement éloignée du point d'injection. On peut ainsi réaliser un canal 52 sur toute la largeur de la pièce à l'intérieur de la nervure de renforcement.

Comme il est visible sur la figure 3, l'épaisseur d de la pièce 50 reste constante au niveau de la nervure de renforcement 51, du fait de la présence du canal 52. Il ne se produit donc pas de retassure au niveau de la nervure 51.

Dans le cas où l'on réaliserait une nervure de renforcement pleine par injection de matière plastique dans une cavité telle que la cavité 27 de forme semi-cylindrique, l'épaisseur de la pièce serait beaucoup plus importante au niveau de la nervure que dans ses autres parties. Le retrait de la matière plastique serait donc beaucoup plus important dans la zone de la nervure, ce qui se traduirait par une retassure sur la face de la pièce opposée à la nervure.

Dans le cas de la pièce représentée sur la figure 3, la nervure 51 se referme par formation d'une paroi 51a au moment de l'extraction de la partie en saillie de l'injecteur. Cependant, même si la paroi de la nervure ne se refermait pas complètement lors de l'éjection de la pièce, la pièce ne présenterait pas de retrait au niveau de la nervure et d'autre part la nervure pourrait assurer un renforcement correct de la pièce.

La matière plastique injectée dans le moule peut être constituée par un matériau thermoplastique quelconque chargé ou non de fibres de verre. Ce matériau peut être constitué par exemple par du polypropylène ou du polyamide.

L'invention ne se limite pas au mode de réalisation qui a été décrit.

C'est ainsi qu'un injecteur suivant l'invention peut être utilisé pour équiper un moule d'injection d'une forme différente de celle qui a été décrite. Cet injecteur peut être utilisé soit seul soit en association avec d'autres injecteurs placés au niveau de cavités du moule destinées à constituer des nervures de renforcement ou dans toute autre partie d'un moule pour la fabrication d'une pièce en matière plastique.

Le fourreau et le pointeau peuvent avoir des formes différentes et peuvent être associés ou non à un tube de grande longueur pour constituer une canne d'injection fixée dans un passage de traversée d'une partie du moule.

Les injecteurs suivant l'invention peuvent être alimentés en gaz sous pression par l'intermédiaire de tout dispositif connu permettant la production, la mise sous pression et la distribution de gaz inerte tel que l'azote.

Enfin, le procédé de moulage, l'injecteur et le moule suivant l'invention peuvent être utilisés non seulement pour la fabrication de pièces renforcées de grandes dimensions telles que des planches de bord ou des pare-chocs pour véhicules automobiles mais encore pour la fabrication de toute pièce de carrosserie d'un véhicule automobile ou, plus généralement, toute autre pièce de structure en matière plastique rigide.

## Revendications

1. Procédé de fabrication d'une pièce en matière plastique par moulage par injection de la matière plastique chaude et sous pression, dans une empreinte de moulage (8) d'un moule (1) comportant un injecteur de gaz sous pression fixé dans une paroi (5) du moule (1) et comportant une partie d'extrémité (24a) en saillie dans l'empreinte de moulage délimitée par des parois internes (4a, 5a) du moule (1), caractérisé par le fait qu'on injecte du gaz sous pression dans l'empreinte (8) du moule (1) renfermant de la matière plastique pendant le moulage, en utilisant un injecteur constitué par un fourreau tubulaire (24) fixé dans une paroi (5) du moule (1) et par un pointeau (32) engagé en position fixe dans l'alésage interne du fourreau (24), percé d'un canal (37) d'alimentation en gaz sous pression communiquant avec une chambre d'injection annulaire (40) délimitée entre la surface intérieure du fourreau (24) et la surface externe du pointeau (32) dont la largeur dans la direction radiale est très faible dans la partie d'extrémité en saillie (24a) de l'injecteur, un très faible jeu radial étant maintenu entre le fourreau (24) et le pointeau (32) dans cette partie d'extrémité (24a).

2. Injecteur de gaz sous pression pour la mise en oeuvre du procédé selon la revendication 1, comportant une partie d'extrémité (24a) en saillie dans l'empreinte de moulage délimitée par les parois internes (4a, 5a) du moule (1), caractérisé par le fait qu'il est constitué par un fourreau tubulaire (24) fixé dans une paroi (5) du moule (1) et par un pointeau (32) engagé en position fixe dans l'alésage interne du fourreau (24), percé d'un canal (37) d'alimentation en gaz sous pression communiquant avec une chambre d'injection annulaire (40) délimitée entre la surface intérieure du fourreau (24) et la surface externe du pointeau (32) dont la largeur dans la direction radiale est très faible dans la partie d'extrémité en saillie (24a) de l'injecteur, un très faible jeu diamétral étant maintenu entre le fourreau (24) et le pointeau (32) dans cette partie d'extrémité (24a).

3. Injecteur suivant la revendication 2, caractérisé par le fait que le jeu diamétral entre le fourreau (32) et le pointeau (24) dans la partie d'extrémité (24a) de l'injecteur est compris entre 0,045 mm et 0,055 mm.

4. Injecteur suivant l'une quelconque des revendications 2 et 3, caractérisé par le fait qu'il comporte de plus un conduit tubulaire (22) raccordé à l'une de ses extrémités au fourreau (24) et relié à son autre extrémité à un moyen d'alimentation en gaz sous pression, de manière à constituer une canne d'injection traversant une ouverture allongée (21) d'une partie du moule (1).

5. Injecteur suivant la revendication 4, caractérisé par le fait que l'extrémité du conduit tubulaire (22) engagée dans le fourreau (24) est en appui sur une extrémité du pointeau (32) pour assurer son maintien à l'intérieur du fourreau (24).

6. Injecteur suivant la revendication 5, caractérisé par le fait qu'un élément de filtration (35) est intercalé entre l'extrémité de l'alésage intérieur du conduit tubulaire (22) et une extrémité correspondante du canal d'alimentation (37) traversant l'injecteur (32).

7. Injecteur suivant l'une quelconque des revendications 1 à 6, caractérisé par le fait que le fourreau (24) comporte un épaulement (29) destiné à venir en appui par l'intermédiaire d'une cale de réglage (30) sur un épaulement (25) correspondant de la paroi (5) du moule, pour le réglage de la longueur de la partie (24a) de l'injecteur en saillie dans l'empreinte de moulage (8).

8. Moule de fabrication d'une pièce en matière plastique comportant au moins un injecteur suivant l'une quelconque des revendications 2 à 7, caractérisé par le fait que l'empreinte de moulage (8) du moule (1) comporte au moins une cavité (27) pour la constitution d'une nervure de renforcement de la pièce, l'extrémité en saillie (24a) de l'injecteur étant placée dans l'empreinte de moulage (8), au niveau de la cavité (27).

9. Moule suivant la revendication 8, caractérisé par le fait que la cavité (27) est délimitée par une partie de la surface du moule (5) de forme semi-cylindrique, l'extrémité de la partie en saillie de l'injecteur (20) étant placée au voisinage de l'axe de la surface semi-cylindrique de la cavité (27).

10. Moule suivant la revendication 9, caractérisé par le fait que le rayon de la cavité semi-cylindrique (27) est sensiblement égal à l'épaisseur de la pièce, dans la direction perpendiculaire aux parois internes (4a, 5a) du moule (1).

## Patentansprüche

1. Verfahren zur Herstellung eines Kunststoffteils durch Spritzgießen von warmem unter Druck stehendem Kunststoffmaterial in einen Formhohlraum (8) einer Form (1) mit einem Injektor für Druckgas, welcher in einer Wand (5) der Form (1) befestigt ist und einen Endabschnitt (24a) aufweist, der in den von Innenwänden (4a, 5a) der Form (1) begrenzten Formhohlraum vorspringt, dadurch gekennzeichnet, daß Druckgas in den das Kunststoffmaterial während der Formung einschließenden Hohlraum (8) der Form (1) unter Verwendung eines Injektors eingebracht wird, der durch eine rohrförmige Scheide (24), die in einer Wand (5) der Form (1) befestigt ist, und durch eine Nadel (32) gebildet ist, die in fester Lage in der Innenbohrung der Scheide (24) eingesetzt und von einem Speisekanal (37) für Druckgas durchsetzt ist, der mit einer ringförmigen Injektionskammer (40) in Verbindung steht, die zwischen der Innenfläche der Scheide (24) und der Außenfläche der Nadel (32) begrenzt ist, deren Breite in radialer Richtung im vorspringenden Endabschnitt (24a) des Injektors sehr gering ist, wobei ein sehr geringes radiales Spiel zwischen der Scheide (24) und der Nadel (32) in diesem Endabschnitt (24a) aufrechterhalten wird.

2. Injektor für Druckgas zur Durchführung des Verfahrens nach Anspruch 1, mit einem in den von den Innenwänden (4a, 5a) der Form (1) begrenzten Formhohlraum vorspringenden Endabschnitt (24a), dadurch gekennzeichnet, daß er durch eine in einer Wand (5) der Form (1) befestigte rohrförmige Scheide (24) und durch eine in fester Lage in einer Innenbohrung der Scheide (24) eingesetzte Nadel (32) gebildet ist, die von einem Speisekanal (37) für Druckgas durchsetzt ist, der mit einer ringförmigen Injektionskammer (40) in Verbindung steht, die zwischen der Innenfläche der Scheide (24) und der Außenfläche der Nadel (32) begrenzt ist, deren Breite in radialer Richtung im vorspringenden Endabschnitt (24a) des Injektors sehr gering ist, wobei ein sehr geringes diametrales Spiel zwischen der Scheide (24) und der Nadel (32) in diesem Endabschnitt (24a) aufrechterhalten ist.

3. Injektor nach Anspruch 2, dadurch gekennzeichnet, daß das diametrale Spiel zwischen der Scheide (32) und der Nadel (24) im Endabschnitt (24a) des Injektors zwischen 0,045 mm und 0,055 mm liegt.

4. Injektor nach irgendeinem der Ansprüche 2 und 3, dadurch gekennzeichnet, daß er ferner eine an einem ihrer Enden an die Scheide (24) angeschlossene und an ihrem anderen Ende mit Speisemitteln für Druckgas verbundene rohrförmige Leitung (22) derart aufweist, daß ein Injektionsrohr gebildet wird, welches eine langgestreckte Öffnung (21) eines Teils der Form (1) durchsetzt.

5. Injektor nach Anspruch 4, dadurch gekennzeichnet, daß das Ende der rohrförmigen Leitung (22), das in der Scheide (24) eingesetzt ist, an einem Ende der Nadel (32) in Anlage ist, um deren Halten im Inneren der Scheide (24) zu gewährleisten.

6. Injektor nach Anspruch 5, dadurch gekennzeichnet, daß ein Filterelement (35) zwischen dem Ende der Innenbohrung der rohrförmigen Leitung (22) und einem entsprechenden Ende des den Injektor (32) durchsetzenden Speisekanals (37) zwischengelegt ist.

7. Injektor nach irgendeinem der Ansprüche 1 bis 6, dadurch gekennzeichnet, daß die Scheide (24) eine Schulter (29) aufweist, die dazu bestimmt ist, über eine Einstellungszwischenscheibe (30) an einer entsprechenden Schulter (25) der Wand (5) der Form für eine Einstellung der Länge des in dem Formhohlraum (8) vorspringenden Abschnitts (24a) des Injektors zur Anlage zu kommen.

8. Form zur Herstellung eines Kunststoffteils, mit wenigstens einem Injektor nach irgendeinem der Ansprüche 2 bis 7, dadurch gekennzeichnet, daß der Formhohlraum (8) der Form (1) wenigstens eine Vertiefung (27) zur Ausbildung einer Verstärkungsrippe des Teils aufweist, wobei das vorspringende Ende (24a) des Injektors im Formhohlraum (8) auf Höhe der Vertiefung (27) angeordnet ist.

9. Form nach Anspruch 8, dadurch gekennzeichnet, daß die Vertiefung (27) durch einen halbzylinderförmigen Abschnitt der Oberfläche der Form (5) bestimmt ist, wobei das Ende des vorspringenden Abschnitts des Injektors (20) im Bereich der Achse der halbzylindrischen Oberfläche der Vertiefung (27) angeordnet ist.

10. Form nach Anspruch 9, dadurch gekennzeichnet, daß der Radius der halbzylindrischen Vertiefung (27) im wesentlichen gleich der Dicke des Teils in Richtung senkrecht zu den Innenwänden (4a, 5a) der Form (1) ist.

## Claims

1. Method of manufacturing a plastic item by injecting hot plastic under pressure into a moulding cavity (8) in a mould (1) having a pressurised gas injector fixed in a wall (5) of the mould (1) and having an end part (24a) projecting into the moulding cavity defined by internal walls (4a, 5a) of the mould (1), characterised by the fact that pressurised gas is injected into the cavity (8) of the mould (1) containing plastic during the moulding, using an injector consisting of a tubular sheath (24) fixed in a wall (5) of the mould (1) and a needle (32) engaged in a fixed position in the internal bore of the sheath (24), with a pressurised gas feed duct (37) passing through it and communicating with an annular injection chamber (40) defined between the internal surface of the sheath (24) and the external surface of the needle (32), whose width in the radial direction is very small in the projecting end part (24a) of the injector, a very small radial clearance being maintained between the sheath (24) and needle (32) in this end part (24a).

2. Pressurised gas injector for implementing the method according to Claim 1, having an end part (24a) projecting into the moulding cavity defined by the internal walls (4a, 5a) of the mould (1), characterised by the fact that it consists of a tubular sheath (24) fixed in a wall (5) of the mould (1) and a needle (32) engaged in a fixed position in the internal bore of the sheath (24), with a pressurised gas feed duct (37) passing through it and communicating with an annular injection chamber (40) defined between the internal surface of the sheath (24) and the external surface of the needle (32), whose width in the radial direction is very small in the projecting end part (24a) of the injector, a very small radial clearance being maintained between the sheath (24) and needle (32) in this end part (24a).

3. Injector according to Claim 2, characterised by the fact that the diametral clearance between the sheath (32) and needle (24) in the end part (24a) of the injector is between 0.045 mm and 0.055 mm.

4. Injector according to either one of Claims 2 and 3, characterised by the fact that it also has a tubular pipe (22) connected at one of its ends to the sheath (24) and connected at its other end to a means of supplying pressurised gas, so as to form an injection tube passing through an elongate opening (21) in one part of the mould (1).

5. Injector according to Claim 4, characterised by the fact that the end of the tubular pipe (22) engaged in the sheath (24) bears on one end of the needle (32) so as to hold it inside the sheath (24).

6. Injector according to Claim 5, characterised by the fact that a filtration element (35) is interposed between the end of the internal bore of the tubular pipe (22) and a corresponding end of the feed duct (37) passing through the injector (32).

7. Injector according to any one of Claims 1 to 6, characterised by the fact that the sheath (24) has a shoulder (29) intended to bear, through an adjusting shim (30), on a corresponding shoulder (25) on the wall (5) of the mould, for adjusting the length of the part (24a) of the injector projecting into the moulding cavity (8).

8. Mould for manufacturing a plastic item, having at least one injector according to any one of Claims 2 to 7, characterised by the fact that the moulding cavity (8) in the mould (1) has at least one hollow (27) for forming a reinforcement rib on the item, the projecting end (24a) of the injector being positioned in the moulding cavity (8) at the hollow (27).

9. Mould according to Claim 8, characterised by the fact that the hollow (27) is defined by a part of the surface of the mould (5) which is semi-cylindrical in shape, the end of the projecting part of the injector (20) being positioned in the vicinity of the axis of the semi-cylindrical surface of the hollow (27).

10. Mould according to Claim 9, characterised by the fact that the radius of the semi-cylindrical hollow (27) is substantially equal to the thickness of the item, in the direction at right angles to the internal walls (4a, 5a) of the mould (1).
